# EUROPÄISCHE PATENTSCHRIFT

(11) **EP 2 059 773 B1**
(45) Veröffentlichungstag und Bekanntmachung des Hinweises auf die Patenterteilung: **27.06.2018**
(21) Anmeldenummer: 08803664.5
(22) Anmeldetag: 04.09.2008
(51) Int. Cl.: B60K 15/03, B60K 15/00, F02M 37/14, G01F 23/296, B60K 15/077, F02M 37/10

(54) **KRAFTSTOFFFÖRDEREINHEIT MIT EINEM AUF ULTRASCHALLWELLEN BASIERTEN FÜLLSTANDSGEBER**
FUEL DELIVERY UNIT WITH A FILLING LEVEL SENSOR OPERATING WITH ULTRASONIC WAVES
UNITÉ DE TRANSPORT DE CARBURANT COMPRENANT UN INDICATEUR DE NIVEAU FONCTIONNANT PAR ULTRASONS

(30) Priorität: 07.09.2007 DE 102007042559
(43) Veröffentlichungstag der Anmeldung: 20.05.2009
(73) Patentinhaber: Continental Automotive GmbH, 30165 Hannover (DE)
(72) Erfinder: RUMPF, Bernd, 61130 Nidderau-Windecken (DE)
(86) Internationale Anmeldenummer: PCT/EP2008/061694
(87) Internationale Veröffentlichungsnummer: WO 2009/034009

(56) Entgegenhaltungen:
- EP-A- 1 081 471
- DE-A1- 10 312 101
- DE-A1- 19 617 496
- US-A1- 2004 079 149

## Beschreibung

Gegenstand der Erfindung ist eine Kraftstofffördereinheit, welche in einen Kraftstoffbehälter eines Kraftfahrzeugs einsetzbar ist, bestehend aus einem Schwalltopf, einem Flansch zum Verschließen einer Öffnung in dem Kraftstoffbehälter, mindestens einem als Hohlprofil ausgebildeten Abstützelement, welches zwischen dem Flansch und dem Schwalltopf angeordnet ist und den Schwalltopf gegen den Boden des Kraftstoffbehälters vorspannt und einem am Schwalltopf angeordneten Füllstandsgeber.

Derartige Kraftstofffördereinheiten werden in Kraftstoffbehältern heutiger Kraftfahrzeuge häufig eingesetzt und sind daher seit langem bekannt. Die Abstützelemente sind in der Regel Rohre oder Stangen, die in Aufnahmen, welche am Flansch angeordnet, insbesondere eingepresst, sind. Der Schwalltopf hat den Abstützelementen entsprechende Bohrungen, in denen die Abstützelemente entlang gleiten. Über mindestens ein Federelement, welches um ein Abstützelement angeordnet ist, wird der Schwalltopf gegen den Boden des Kraftstoffbehälters vorgespannt. Diese Vorspannung ist für die Bodenreferenzierung des Füllstandsgebers notwendig, da der Füllstandgeber zur Ermittlung der Kraftstoffmenge oftmals am Schwalltopf angeordnet ist. Eine fehlende Bodenreferenzierung würde zu einer fehlerhaften Füllstandsmessung führen, da der Boden des Kraftstoffbehälters in Abhängigkeit vom Gewicht des Kraftstoffs durchgebogen wird, wodurch der Abstand zwischen Boden und oberer Begrenzungswand des Kraftstoffbehälters vom Füllstand im Kraftstoffbehälter abhängig ist.

Aus der DE 199 42 379 A1 ist eine Vorrichtung zum Messen von Füllständen mittels Ultraschall bekannt. Zur besseren Signalleitung und Signalauswertung ist ein starres Messrohr im Kraftstoffbehälter vorgesehen. Daher haben sowohl eine füllstandsabhängigen Änderung des Abstandes zwischen dem Boden und der oberen Begrenzungswand des Kraftstoffbehälters als auch herstellungsbedingte Toleranzen im Bereich von mehreren Millimetern zur Folge, dass das Messrohr nicht optimal bis unmittelbar unter die obere Begrenzungswand des Kraftstoffbehälters angeordnet werden kann. Die Schallwellen und deren Reflexionen müssen daher teilweise ungeführt den Kraftstoffbehälter durchlaufen.

Der Erfindung liegt daher die Aufgabe zugrunde, ein Kraftstofffördereinheit zu schaffen, die eine genaue Ermittlung des Füllstandes in einem Kraftstoffbehälter ermöglicht, wobei insbesondere bei der Verwendung von Ultraschall eine Wellenleitung über den gesamten Laufweg ermöglicht wird. Darüber hinaus soll die Kraftstofffördereinheit möglichst einfach aufgebaut sein.

Erfindungsgemäß wird die Aufgabe dadurch gelöst, dass der Schwalltopf mindestens eine Aufnahme für das mindestens eine Abstützelement besitzt, in der das Abstützelement bei einem sich verändernden Abstand zwischen Flansch und Schwalltopf gleitet, dass die Aufnahme bis zum Boden des Schwalltopfes ausgebildet ist, und den Umfang des Abstützelementes vollständig umschließt, dass die Aufnahme im Bodenbereich eine Öffnung aufweist, über die Kraftstoff aus dem Kraftstoffbehälter in die Aufnahme eindringen kann, dass der Füllstandsgeber einer Sende- und Empfangseinheit für Ultraschallwellen aufweist und dass die Sende- und Empfangseinheit derart in der Kraftstofffördereinheit angeordnet ist, dass die Ultraschallwellen in der Aufnahme und dem Abstützelement laufen.

Durch die Ausbildung der Aufnahme für das Abstützelement bis zum Boden des Schwalltopfes und der Anordnung der Sende- und Empfangseinheit für Ultraschall derart, dass die Ultraschallwellen in der Aufnahme und dem Abstützelement laufen, dienen die Aufnahme und das Abstützelement als Messrohr. Ein separates Messrohr kann daher entfallen. Durch die Einsparung des separaten Messrohres lässt sich die erfindungsgemäße Kraftstofffördereinheit kostengünstig herstellen. Die Ausbildung der Bauteile Aufnahme und Abstützelement nach Art einer Teleskopanordnung gewährleistet darüber hinaus, dass auf diese Weise ein Messrohr geschaffen wird, welches unabhängig von Fertigungstoleranzen und füllstandsabhängigen Abständen zwischen Boden und oberer Begrenzungswand des Kraftstoffbehälters eine geführte Ausbreitung der Ultraschallwellen über die gesamte Höhe gewährleistet. Ermöglicht wird dies insbesondere dadurch, dass das Abstützelement durch seine Verbindung mit dem Flansch bis unmittelbar in den Bereich der oberen Begrenzungswand reicht.

In einer vorteilhaften Ausgestaltung ist die Sende- und Empfangseinheit bezogen auf die Einbaulage der Kraftstofffördereinheit im Bereich des oberen Endes des Abstützelementes angeordnet, wodurch die Sende- und Empfangseinheit nahe dem Flansch der Kraftstofffördereinheit angeordnet ist. Diese Ausgestaltung ermöglicht zum einen eine Vormontage der Sende- und Empfangseinheit mit dem Abstützelement. Zum anderen lassen sich aufgrund der flanschnahen Anordnung die elektrischen Anschlussleitungen relativ kurz und somit störunanfälliger ausführen.

In einer verbesserten Ausführung ist die Sende- und Empfangseinheit im Flansch, insbesondere in einer Buchse des Flansches angeordnet, in der das Abstützelement mit seinem oberen Ende angeordnet ist. Dadurch wird die vollständige Integration der Sende- und Empfangseinheit in den Flansch ermöglicht. Elektrische Anschlussleitungen im Kraftstoffbehälter können entfallen, wenn die elektrischen Anschlüsse als elektrische Durchführung zur Flanschaußenseite ausgebildet sind.

In einer anderen vorteilhaften Ausgestaltung ist die Sende- und Empfangseinheit bezogen auf die Einbaulage der Kraftstofffördereinheit im unteren Bereich, vorzugsweise am Boden, der Aufnahme des Abstützelementes angeordnet. Mit dieser Anordnung erfolgt die Messung durch den Kraftstoff. Infolgedessen lässt sich die Sende- und Empfangseinheit mit einer geringeren Leistung betreiben.

Die Anordnung der Sende- und Empfangseinheit mit dem Flansch oder dem Schwalltopf wird in besonders zuverlässiger Weise mittels einer stoffschlüssigen Verbindung, vorzugsweise durch Umspritzen, Schweißen oder Kleben, erreicht. Insbesondere das Umspritzen hat den Vorteil, dass damit die Sende- und Empfangseinheit zuverlässig gegen Kraftstoff und dessen aggressive Bestandteile geschützt ist, wobei die Bereiche der Sende- und Empfangseinheit, welche die Ultraschallwellen aussenden und empfangen von der Umspritzung ausgenommen sind.

Eine kompakte und damit störunanfällige Bauweise wird dadurch erreicht, dass die Sende- und Empfangseinheit eine Auswerteelektronik besitzt, die derart ausgestaltet ist, dass auf Basis der Ultraschallwellen ein dem Füllstand entsprechendes elektrisches Signal erzeugbar ist.

Sofern die Sende- und Empfangseinheit im Schwalltopf angeordnet ist wird ein Schutz der Auswerteelektronik dadurch erreicht, dass die Auswerteelektronik beabstandet zur Sende- und Empfangseinheit, vorzugsweise im Flansch angeordnet ist. Die Auswerteelektronik kann im Flansch zum Schutz vor aggressiven Bestandteilen des Kraftstoffs in einem Gehäuse, welches im Flansch ausgebildet ist, angeordnet werden. Es ist aber auch denkbar, im Bodenbereich des Schwalltopfes einen Raum vorzusehen, in dem die Auswerteelektronik mit Abstand zur Sende- und Empfangseinheit angeordnet ist.

In einer weiteren vorteilhaften Ausgestaltung ist die Auswerteelektronik separat in einem hermetisch abgedichteten Gehäuse angeordnet, wobei die Leiterplatte oder die Keramik, welche die Auswerteelektronik trägt, ein Bestandteil des Gehäuses sein kann, welches druck- und flüssigkeitsdicht mit einem Deckel verbunden ist.

Um eine möglichst ungestörte Ausbreitung der Ultraschallwellen beim Übergang vom Abstützelement zur Aufnahme und umgekehrt zu gewährleisten, besitzen das Abstützelement und die Aufnahme die gleiche Querschnittsform. Die Querschnittsform kann dabei beliebig, z.B. rund, oval oder rechteckig sein.

Für eine hinreichend genaue Messung des Füllstandes ist es wichtig, dass der Füllstand in der Aufnahme und im Abstützelement gleich dem Füllstand im Kraftstoffbehälter ist. Infolge der bekannten Anordnung des Abstützelements am Flansch kann es sich ergeben, dass sich im Abstützelement ein Staudruck aufbaut, infolge dessen der Füllstand in der Aufnahme und im Abstützelement verschieden zu dem Füllstand im Kraftstoffbehälter ist. Es hat sich daher als vorteilhaft erwiesen, in der Buchse zur Aufnahme des Abstützelementes und/oder im Abstützelement eine Öffnung vorzusehen, über die das Innere des Abstützelementes mit der Umgebung im Kraftstoffbehälter verbunden ist. Im einfachsten Fall ist die Öffnung als Bohrung ausgebildet.

An zwei Ausführungsbeispielen wird die Erfindung näher erläutert. Dabei zeigen
- Figur 1:: eine erfindungsgemäße Kraftstofffördereinheit in einem Kraftstoffbehälter und
- Figur 2:: eine zweite Ausführungsform der Kraftstofffördereinheit gemäß Figur 1.

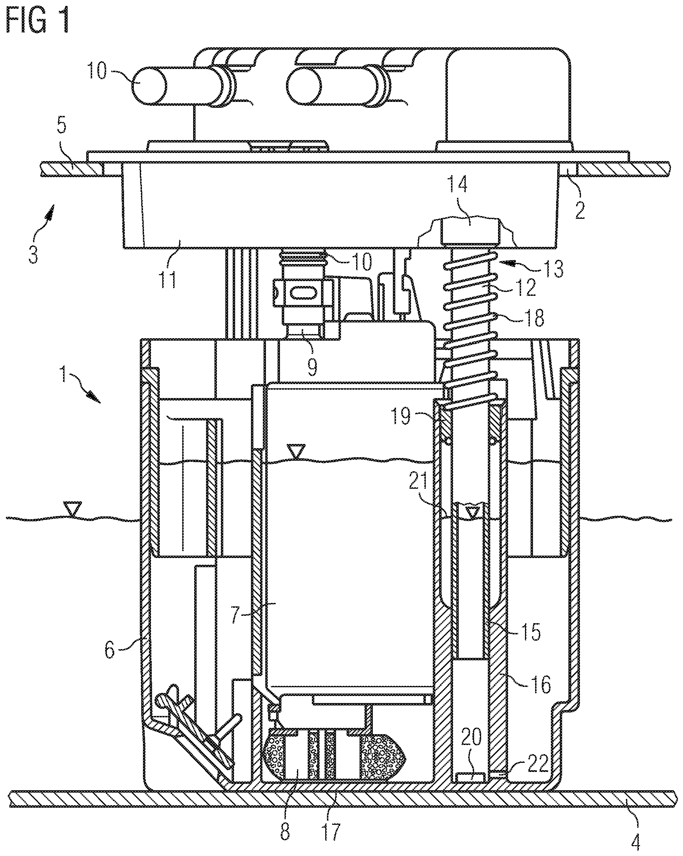

Die Kraftstofffördereinheit 1 in Fig. 1 ist durch eine Öffnung 2 in einen Kraftstoffbehälter 3 eingesetzt. Der Kraftstoffbehälter 3 weist einen Boden 4 und eine obere Begrenzungswand 5 auf. Die Kraftstofffördereinheit 1 besitzt einen Schwalltopf 6, in dem eine Kraftstoffpumpe 7 angeordnet ist, und einen Flansch 11, der die Öffnung 2 verschließt. Die Kraftstoffpumpe 7 saugt über einen Vorfilter 8 Kraftstoff aus dem Schwalltopf 6 an und fördert den Kraftstoff über einen Auslass 9 in eine Vorlaufleitung 10, welche durch den Flansch 11 zu einer nicht dargestellten Brennkraftmaschine eines Kraftfahrzeugs führt.

Der Flansch 11 und der Schwalltopf 6 der Kraftstofffördereinheit 1 sind über ein als kreisförmiges Rohr ausgebildetes Abstützelement 12 miteinander verbunden. Die Verbindung mit dem Flansch 11 erfolgt über den oberen Bereich 13 des Rohrs 12, der in eine Buchse 14 des Flanschs 11 eingepresst ist. Das untere Ende 15 des Rohrs 12 ist in einer Aufnahme 16 mit kreisförmigem Querschnitt derart angeordnet, dass das Rohr 12 entlang der Aufnahme 16 gleiten kann. Die Aufnahme 16 erstreckt sich bis zum Boden 17 des Schwalltopfes 6. Eine Schraubenfeder 18 ist außen am Rohr 12 so angeordnet, dass sie sich an der Buchse 14 des Flansches 11 und an einem Gegenhalter 19, welcher an der Aufnahme 16 befestigt ist, abstützt und so die Vorspannung des Schwalltopfes 6 gegen den Boden 4 des Kraftstoffbehälter 3 gewährleistet.

Am Boden der Aufnahme 16 ist eine Sende- und Empfangseinheit 20 angeordnet, welche Ultraschallwellen durch den Kraftstoff in Richtung Flansch 11 aussendet. Die Ultraschallwellen werden an der Füllstandsgrenze 21 reflektiert. Die reflektierten Ultraschallwellen werden von der Sende- und Empfangseinheit 20 detektiert und einer nicht dargestellten Auswerteelektronik zugeführt, in der auf Basis der Ultraschallwellen ein dem Füllstand entsprechendes elektrisches Signal erzeugt wird.

Der Füllstand in der Aufnahme 16 entspricht dem Füllstand im Kraftstoffbehälter 3. Die Gleichheit der beiden Füllstände wird durch eine Bohrung 22 gewährleistet, welche das Innere der Aufnahme 16 mit der Umgebung im Kraftstoffbehälter 3 verbindet. Zur besseren Darstellung wurde die Bohrung um 90° nach rechts in die Zeichenebene gedreht.

Der Füllstand im Schwalltopf 6 liegt gegenüber den beiden Füllständen in der Aufnahme 16 und dem Kraftstoffbehälter 3 auf einem höheren Niveau, da der Schwalltopf 3 über eine nicht dargestellte Saugstrahlpumpe permanent mit Kraftstoff aus dem Kraftstoffbehälter 3 befüllt wird.

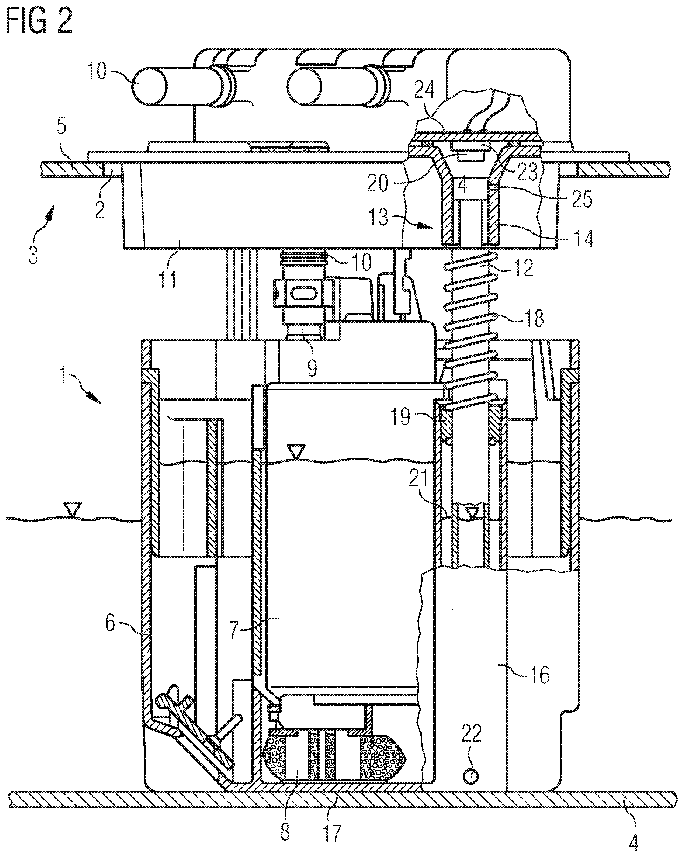

Die Kraftstofffördereinheit 1 in Figur 2 entspricht im Grundaufbau der in Figur 1. Der Unterschied besteht in der Anordnung der Sende- und Empfangseinheit 20, welche die Ultraschallwellen in Richtung Schwalltopf 6 aussendet und die an der Füllstandsgrenze 21 reflektierten Ultraschallwellen detektiert.

Die Sende- und Empfangseinheit 20 ist zusammen mit einer Auswerteelektronik 23 zu einer Einheit verbunden. Die Einheit ist auf einem Träger 24 angeordnet, der im Flansch 11 befestigt ist. Elektrische Anschluss- und Signalleitungen führen von der Auswerteelektronik 23 zu einer nicht dargestellten, elektrischen Durchführung im Flansch 11. Es ist aber auch möglich, die Einheit mit der Auswerteelektronik 23 im Bereich der Buchse 14 in den Flansch einzuspritzen, um so die Auswerteelektronik 23 geschützt im Flansch 11 zu befestigen.

In der Buchse 14 ist eine Bohrung 25 angeordnet, welche das Innere des Rohres 12 mit der Umgebung im Kraftstoffbehälter 3 verbindet. Diese Bohrung 25 dient dem Druckausgleich zwischen dem Kraftstoffbehälter 3 und dem Inneren des Rohres 12 und der Aufnahme 16, um immer gleiche Füllstände zu gewährleisten. Die Bohrung 22 im unteren Bereich der Aufnahme 16 ist in ihrer lagerichtigen Anordnung dargestellt.

## Patentansprüche

1. Kraftstofffördereinheit, welche in einen Kraftstoffbehälter eines Kraftfahrzeugs einsetzbar ist, bestehend aus einem Schwalltopf, einem Flansch zum Verschließen einer Öffnung in dem Kraftstoffbehälter, mindestens einem als Hohlprofil ausgebildeten Abstützelement, welches zwischen dem Flansch und dem Schwalltopf angeordnet ist und den Schwalltopf gegen den Boden des Kraftstoffbehälters vorspannt und einem in der Kraftstofffördereinheit angeordneten Füllstandsgeber, **dadurch gekennzeichnet, dass** der Schwalltopf (6) mindestens eine Aufnahme (16) für das mindestens eine Abstützelement (12) besitzt, in der das Abstützelement (12) bei einem sich verändernden Abstand zwischen Flansch (11) und Schwalltopf (6) gleitet, dass die Aufnahme (16) bis zum Boden (17) des Schwalltopfes (6) ausgebildet ist und den Umfang des Abstützelementes (12) vollständig umschließt, dass die Aufnahme (16) im Bodenbereich eine Öffnung (22) aufweist, über die Kraftstoff aus dem Kraftstoffbehälter (3) in die Aufnahme (16) eindringen kann, dass der Füllstandsgeber einer Sende- und Empfangseinheit (20) für Ultraschallwellen aufweist und dass die Sende- und Empfangseinheit (20) derart in der Kraftstofffördereinheit (1) angeordnet ist, dass die Ultraschallwellen in der Aufnahme (16) und dem Abstützelement (12) laufen.

2. Kraftstofffördereinheit nach Anspruch 1, **dadurch gekennzeichnet, dass** die Sende- und Empfangseinheit (20) bezogen auf die Einbaulage der Kraftstofffördereinheit (1) im Bereich des oberen Endes des Abstützelementes (12) angeordnet ist.

3. Kraftstofffördereinheit nach Anspruch 2, **dadurch gekennzeichnet, dass** das Abstützelement (12) mit seinem oberen Ende in einer Buchse (14) des Flansches (11) angeordnet ist, und dass die Sende- und Empfangseinheit (20) im Flansch (11), insbesondere in der Buchse (14) für das Abstützelement (12), angeordnet ist.

4. Kraftstofffördereinheit nach Anspruch 1, **dadurch gekennzeichnet, dass** die Sende- und Empfangseinheit (20) bezogen auf die Einbaulage der Kraftstofffördereinheit (1) im unteren Bereich, vorzugsweise am Boden der Aufnahme (16) für das Abstützelement (12) angeordnet ist.

5. Kraftstofffördereinheit nach einem der Ansprüche 1 bis 4, **dadurch gekennzeichnet, dass** die Sende- und Empfangseinheit (20) mit dem Flansch (11) oder dem Schwalltopf (6) stoffschlüssig, vorzugsweise durch Umspritzen, Schweißen oder Kleben, verbunden ist.

6. Kraftstofffördereinheit nach einem der Ansprüche 1 bis 5, **dadurch gekennzeichnet, dass** die Sende- und Empfangseinheit (20) eine Auswerteelektronik (23) besitzt, die derart ausgestaltet ist, dass auf Basis der Ultraschallwellen ein dem Füllstand entsprechendes elektrisches Signal erzeugbar ist.

7. Kraftstofffördereinheit nach einem der Ansprüche 1 bis 5, **dadurch gekennzeichnet, dass** die Auswerteelektronik (23) beabstandet zur Sende- und Empfangseinheit (20), vorzugsweise im Flansch (11), angeordnet ist.

8. Kraftstofffördereinheit nach einem der Ansprüche 1 bis 7, **dadurch gekennzeichnet, dass** das Abstützelement (12) und die Aufnahme (16) die gleiche Querschnittsform, vorzugsweise kreisförmig, oval, rechteckig, aufweisen.

9. Kraftstofffördereinheit nach einem der Ansprüche 3 bis 8, **dadurch gekennzeichnet, dass** die Buchse (14) zur Aufnahme des Abstützelementes (12) und/oder das Abstützelement (12) eine Öffnung (22, 25), vorzugsweise eine Bohrung, aufweist, über die das Innere des Abstützelementes (12) mit der Umgebung im Kraftstoffbehälter (3) verbunden ist.

## Claims

1. Fuel delivery unit which can be inserted into a fuel tank of a motor vehicle, comprising a swirl pot, a flange for closing off an opening in the fuel tank, at least one support element which is designed as a hollow profile and which is arranged between the flange and the swirl pot and which preloads the swirl pot against the base of the fuel tank, and comprising a filling level sensor arranged in the fuel delivery unit, **characterized in that** the swirl pot (6) has at least one receptacle (16) for the at least one support element (12), in which receptacle (16) the support element (12) slides when the spacing between the flange (11) and swirl pot (6) changes, **in that** the receptacle (16) is formed as far as the base (17) of the swirl pot (6) and completely surrounds the circumference of the support element (12), **in that** the receptacle (16) has an opening (22) in the base region, via which opening (22) fuel can enter into the receptacle (16) from the fuel tank (3), **in that** the filling level sensor has a transmitting and receiving unit (20) for ultrasound waves, and **in that** the transmitting and receiving unit (20) is arranged in the fuel delivery unit (1) in such a way that the ultrasound waves run in the receptacle (16) and in the support element (12).

2. Fuel delivery unit according to Claim 1, **characterized in that** the transmitting and receiving unit (20) is arranged in the region of the upper end of the support element (12) in the installed position of the fuel delivery unit (1).

3. Fuel delivery unit according to Claim 2, **characterized in that** the support element (12) is arranged with its upper end in a bush (14) of the flange (11), and **in that** the transmitting and receiving unit (20) is arranged in the flange (11), in particular in the bush (14) for the support element (12).

4. Fuel delivery unit according to Claim 1, **characterized in that** the transmitting and receiving unit (20) is arranged in the lower region, preferably on the base of the receptacle (16) for the support element (12), in the installed position of the fuel delivery unit (1).

5. Fuel delivery unit according to one of Claims 1 to 4, **characterized in that** the transmitting and receiving unit (20) is connected cohesively, preferably by extrusion coating, welding or adhesive bonding, to the flange (11) or to the swirl pot (6).

6. Fuel delivery unit according to one of Claims 1 to 5, **characterized in that** the transmitting and receiving unit (20) has evaluating electronics (23) which are designed such that an electrical signal corresponding to the filling level can be generated on the basis of the ultrasound waves.

7. Fuel delivery unit according to one of Claims 1 to 5, **characterized in that** the evaluating electronics (23) are arranged remote from the transmitting and receiving unit (20), preferably in the flange (11).

8. Fuel delivery unit according to one of Claims 1 to 7, **characterized in that** the support element (12) and the receptacle (16) have the same cross-sectional shape, preferably circular, oval, rectangular.

9. Fuel delivery unit according to one of Claims 3 to 8, **characterized in that** the bush (14) for holding the support element (12) and/or the support element (12) have/has an opening (22, 25), preferably a bore, via which the interior of the support element (12) is connected to the surroundings in the fuel tank (3).

## Revendications

1. Unité de transport de carburant, pouvant être utilisée dans un réservoir de carburant d'un véhicule automobile, composée d'un pot d'équilibrage, d'un flasque pour fermer une ouverture dans le réservoir de carburant, d'au moins un élément d'étayage réalisé sous la forme d'un profilé creux disposé entre le flasque et le pot d'équilibrage et précontraignant le pot d'équilibrage contre le fond du réservoir de carburant et d'un indicateur de remplissage disposé dans l'unité de transport de carburant, **caractérisée en ce que** le pot d'équilibrage (6) possède au moins un logement (16) pour l'au moins un élément d'étayage (12) dans lequel l'élément d'étayage (12) glisse à une certaine distance variable entre le flasque (11) et le pot d'équilibrage (6), que le logement (16) est réalisé jusqu'au fond (17) du pot d'équilibrage (6) et enceint entièrement la circonférence de l'élément d'étayage (12), que le logement (16) comporte une ouverture (22) dans la zone de fond via laquelle le carburant sortant du réservoir de carburant (3) peut pénétrer dans le logement (16), que l'indicateur de remplissage comporte une unité d'envoi et de réception (20) pour les ondes ultrasoniques et que l'unité d'envoi et de réception (20) est disposée de telle sorte dans l'unité de transport de carburant (1) que les ondes ultrasoniques circulent dans le logement (16) et l'élément d'étayage (12).

2. Unité de transport de carburant selon la revendication 1, **caractérisée en ce que** l'unité d'envoi et de réception (20) est disposée dans la zone de l'extrémité supérieure de l'élément d'étayage (12) par rapport à la position de montage de l'unité de transport de carburant (1).

3. Unité de transport de carburant selon la revendication 2, **caractérisée en ce que** l'élément d'étayage (12) est disposé avec son extrémité supérieure dans une douille (14) du flasque (11) et que l'unité d'envoi et de réception (20) est disposée dans le flasque (11), notamment dans la douille (14) pour l'élément d'étayage (12).

4. Unité de transport de carburant selon la revendication 1, **caractérisée en ce que** l'unité d'envoi et de réception (20) est disposée dans la zone inférieure, de préférence au fond du logement (16) prévu pour l'élément d'étayage (12) par rapport à la position de montage de l'unité de transport de carburant (1).

5. Unité de transport de carburant selon l'une quelconque des revendications 1 à 4, **caractérisée en ce que** l'unité d'envoi et de réception (20) est reliée au flasque (11) ou au pot d'équilibrage (6) par complémentarité de matières, de préférence par injection, soudure ou collage.

6. Unité de transport de carburant selon l'une quelconque des revendications 1 à 5, **caractérisée en ce que** l'unité d'envoi et de réception (20) possède un système électronique d'analyse (23) configuré de façon à pouvoir produire un signal électrique correspondant à l'état de remplissage sur la base des ondes ultrasoniques.

7. Unité de transport de carburant selon l'une quelconque des revendications 1 à 5, **caractérisée en ce que** le système électronique d'analyse (23) est disposé à une certaine distance de l'unité d'envoi et de réception (20), de préférence dans le flasque (11).

8. Unité de transport de carburant selon l'une quelconque des revendications 1 à 7, **caractérisée en ce que** l'élément d'étayage (12) et le logement (16) comportent la même forme en section transversale, de préférence une forme de cercle, d'ovale, de rectangle.

9. Unité de transport de carburant selon l'une quelconque des revendications 3 à 8, **caractérisée en ce que** la douille (14) et/ou l'élément d'étayage (12) comporte une ouverture (22, 25), de préférence un alésage, pour recevoir l'élément d'étayage (12), l'intérieur de l'élément d'étayage (12) étant relié à l'environnement dans le réservoir de carburant (3) via ledit alésage.
